# EUROPÄISCHE PATENTSCHRIFT

(11) **EP 0 379 012 B1**
(45) Veröffentlichungstag und Bekanntmachung des Hinweises auf die Patenterteilung: **27.04.1994**
(21) Anmeldenummer: 90100224.6
(22) Anmeldetag: 05.01.1990
(51) Int. Cl.: H02K 3/48, H02K 15/12

(54) **Verfahren zur Herstellung des Stators einer elektrischen Grossmaschine**
Method for manufacturing the stator of a large electric machine
Méthode pour la fabrication de stator d'une grosse machine électrique

(30) Priorität: 17.01.1989 DE 3901230
(43) Veröffentlichungstag der Anmeldung: 25.07.1990
(73) Patentinhaber: SIEMENS AKTIENGESELLSCHAFT, 80333 München (DE)
(72) Erfinder: Wichmann, Arnold, Dr., D-4330 Mülheim/Ruhr (DE)

(56) Entgegenhaltungen:
- CA-A- 1 095 108
- DE-A- 1 538 935
- DE-A- 1 613 231
- DE-A- 1 803 161
- DE-A- 2 342 168
- DE-C- 0 864 899
- FR-A- 1 229 147
- GB-A- 0 758 964

## Beschreibung

Die vorliegende Erfindung bezieht sich auf Statoren für elektrische Großmaschinen mit elektrischer Leistungsaufnahme oder -abgabe von mehr als etwa 20 MVA, vorzugsweise mehr als etwa 50 MVA, insbesondere Turbogeneratoren, deren Leiterwicklungen zum Teil aus in Nuten eingelegten Wicklungsstäben bestehen, sowie ein entsprechendes Herstellungsverfahren.

Gemäß dem Stand der Technik erfolgt der Aufbau der elektrischen Leiterwicklungen für Statoren und Rotoren elektrischer Großmaschinen in der Weise, daß in die Formkörper für die Maschinenteile Nuten eingearbeitet werden, in die elektrische Leiter in Form von kompakten Stäben oder mehr oder weniger komplexen Anordnungen solcher Stäbe, in der Regel umgeben von isolierendem Material, eingelegt werden. Danach werden die Nuten mit geeigneten Mitteln verschlossen und die einzelnen Wicklungsstäbe elektrisch leitend miteinander verbunden.

Beim Betrieb der elektrischen Maschinen sind die Wicklungsstäbe erheblichen Kräften ausgesetzt; im Fall feststehender Wicklungsstäbe handelt es sich in erster Linie um magnetisch bedingte Kräfte, im Falle rotierender Wicklungsstäbe sind vor allem Zentrifugalkräfte zu nennen. Zur Kompensation der beim Betrieb auftretenden Kräfte lehrt die DE-A 21 65 727, die Wicklungsstäbe in ihren Nuten dadurch zu fixieren, daß zwischen Wicklungsstäbe und Nutverschlußvorrichtung ein federndes Element, insbesondere eine Blattfeder, angeordnet wird. Auf diese Weise werden die Wicklungsstäbe nach der Montage mit erheblicher Kraft in die Nut gepreßt.
So ist es möglich, die betriebsbedingten Kräfte, die an den Wicklungsstäben auftreten, zu kompensieren.

Die Befestigung der Wicklungsstäbe in den Nuten wird gemäß der DE-A 30 16 990 weiter verbessert, wenn federnde Elemente nicht nur zwischen Nutverschlußvorrichtung und Wicklungsstäbe, sondern auch zwischen Wicklungsstäbe und Nutwände gebracht werden. Damit sind die Wicklungsstäbe weitgehend fixiert, während in der Anordnung gemäß der DE-A 21 65 727 noch ein gewisses Spiel der Stäbe zwischen den Wänden der Nut möglich ist.

Eine detaillierte Beschreibung des Aufbaus üblicher Wicklungsstäbe findet sich in der DE-C 31 02 849. Gemäß dieser Schrift besteht ein Wicklungsstab aus einem elektrisch leitfähigen Stab oder einer Mehrzahl solcher Stäbe, die sämtlich oder teilweise zur Führung von Kühlmittel hohl sein können, und einer den oder die Leiter umgebenden Isolierschicht. Diese Isolierschicht wird üblicherweise hergestellt, indem die Leiteranordnung mit einem tränkfähigen, isolierstoffhaltigen Band umwickelt, diese Bewicklung mit einem härtbaren Harz getränkt und schließlich das Harz ausgehärtet wird. Da das harzgetränkte Isoliermaterial vor der Aushärtung keinerlei Formstabilität besitzt, muß die Aushärtung des Tränkharzes in einer Preßform erfolgen, in die der Wicklungsstab einzulegen ist. Dies erhöht den Aufwand bei der Fertigung um ein beträchtliches Maß.

Weitere Probleme beim Betrieb elektrischer Großmaschinen entstehen dadurch, daß die Formkörper, auf denen die Statoren aufgebaut sind, selbst zu Schwingungen angeregt werden können. Diese Schwingungen sind deswegen bedrohlich, weil sie unter anderem zum Lösen von Schraubverbindungen und, was am bedenklichsten ist, zur Bildung von Haarrissen führen können. Haarrisse sind sehr schwer zu entdecken, tragen jedoch ein Gefahrenpotential mit sich, das von der Beeinträchtigung der elektrischen Eigenschaften der Maschinenteile bis zu ihrer völligen Zerstörung reicht. Um diesem Problem zu begegnen, wird in der DE-A 36 12 112 vorgeschlagen, mit Hilfe spezieller Nutverschlußkeile die Formkörper der Maschinenteile zu verspannen. Das Schwingungsverhalten der Maschinenteile wird damit eindeutig positiv beeinflußt, jedoch ist der Herstellungsaufwand hoch.

Eine gewisse Verringerung des Aufwandes für die Befestigung von Wicklungsstäben in Nuten elektrischer Maschinen ergibt sich dann, wenn zum Verschließen der Nuten Nutverschlußkeile eingesetzt werden, die in sich federn. Gemäß der DE-U 82 26 274 kann ein solcher federnder Nutverschlußkeil durch eine Blattfeder aus faserverstärktem Kunststoff dargestellt werden. Eine substantielle Verringerung des Montageaufwandes kann durch die Verwendung solcher Kunststoff-Blattfedern jedoch nicht erreicht werden.

Als besonders wirtschaftliches Verfahren zur Verbesserung der elektrischen Eigenschaften, insbesondere der Qualität der Dielektrika, der Statoren elektrischer Großmaschinen wurde in den letzten Jahren das sogenannte Ganztränkverfahren ausgearbeitet, das in ähnlicher Form bereits zur Fertigung von Kleintransformatoren und dgl. bekannt war. Im Wege des Ganztränkverfahrens werden zunächst die Statoren ohne vorherige Harztränkung komplett montiert und anschließend als Ganzes getränkt. Insbesondere werden die Wicklungsstäbe mit ungetränkten Isolierstoffummantelungen eingebaut und erhalten ihre Harztränkung erst in fertig eingebautem Zustand. Der hohe Aufwand der Herstellung einer formgetreuen Isolierung der Wicklungsstäbe entfällt.

Wege zur Ganztränkung des Stators einer elektrischen Großmaschine werden in der DE-A-23 42 168 und der DE-A-36 36 008 beschrieben. Die DE-A-23 42 168 betrifft dabei einen Stator, der im wesentlichen in bereits beschriebener Weise konventionell, mit bereits fertig isolierten Wicklungsstäben, aufgebaut ist und mit einer zusätzlichen Harztränkung versehen wird; die DE-A-36 36 008 betrifft den Aufbau des zur Ganztränkung vorgesehenen Stators einer elektrischen Großmaschine, wobei die Wicklungsstäbe vor dem Einbau mit keinerlei Harztränkung versehen werden. Im Hinblick auf den Verschluß der Statornuten gehen beide Schriften jedoch nicht über die aus der Konstruktion konventioneller Statoren bekannte Technik hinaus, die Nuten mit relativ voluminösen, kompliziert aufgebauten Verschlußkeilen zu verschließen und mit diesen gleichzeitig die Wicklungsstäbe fest in die Nuten einzupressen.

Die der vorliegenden Erfindung zugrundeliegende Aufgabe ist es, beim Aufbau der Statoren, die im Wege der Herstellung komplett mit Kunstharz imprägniert werden, neben den elektrischen Eigenschaften des ausgehärteten Tränkharzes auch die mechanischen Vorteile der Tränkung zur Erzielung eines besonders robusten, kompakten und kostengünstigen Produktes zu nutzen. Es soll ein Weg gefunden werden, die Wicklungsstäbe zumindest teilweise, vorzugsweise in wesentlichem Umfang, mit dem Tränkharz in den Nuten zu befestigen, so daß statt der bisher bekannten, voluminösen Nutverschlußkeile einfachere Verschlußmittel einsetzbar sind und somit die Möglichkeit erschlossen werden kann, entweder in den Nuten mehr Raum für Leiterwicklungen zur Verfügung zu haben oder aber die Abmessungen des Stators bei gegebenen Belastungsanforderungen nennenswert reduzieren zu können.

Erfindungsgemäß werden Statoren elektrischer Großmaschinen, deren Leiterwicklungen zum Teil aus in Nuten eingelegten Wicklungsstäben bestehen, hergestellt, indem nach dem Einlegen der Wicklungsstäbe die Nuten mittels Nutverschlußleisten verschlossen werden, die in Ausnehmungen im Bereich der Nutöffnungen eingepaßt werden und nach der Einpassung eine federnde Einpressung der Wicklungsstäbe in die Nuten bewirken, wobei die Wicklungsstäbe lediglich mit einer solchen Kraft gepreßt werden, die zur Verhinderung von Lageänderungen der Wicklungsstäbe während des weiteren Herstellungsverfahrens ausreichend ist. Als letzte Schritte des Herstellungsverfahrens erfolgen das Imprägnieren der komplett montierten Anordnung mit aushärtbarem Kunstharz, z. B. im Wege der Ganztränkung, und das Aushärten der Kunstharzimprägnierung, das in der Regel durch eine Wärmebehandlung bewerkstelligt wird.

Entsprechend wird ein Verfahren zur Herstellung des Stators einer elektrischen Großmaschine angegeben, wobei die Leiterwicklungen des Stators zum Teil aus in Nuten eingelegten Wicklungsstäben bestehen, mit den Merkmalen:
a) die Wicklungsstäbe werden in die Nuten eingelegt;
b) die Nuten werden mittels Nutverschlußleisten aus dünnen, vor der Einpassung etwa ebenen Platten unter Bewirkung einer federnden Einpressung der Wicklungsstäbe in die Nuten verschlossen, wobei jede Nutverschlußleiste unter Bildung einer entlang der Nut verlaufenden, in die Nut hineingerichteten Wölbung in Ausnehmungen der Nut im Bereich der Nutöffnung eingepaßt wird;
c) die Einpressung der Wicklungsstäbe erfolgt lediglich mit einer solchen Kraft, wie sie zur Verhinderung wesentlicher Lageänderungen der Wicklungsstäbe während des weiteren Herstellungsverfahrens ausreichend ist; Ein derartiges Verfahren ist aus der DE-A-1 538 935 bekannt. Erfindungsgemäß ist das Verfahren dadurch gekennzeichnet, daß
d) die montierte Statoranordnung mit aushärtbarem Kunstharz im Wege der Ganztränkung imprägniert wird;
e) die Kunstharz-Imprägnierung durch Wärmebehandlung ausgehärtet wird.

Die vorliegende Erfindung zeigt, daß bei den Statoren elektrischer Großmaschinen, die einer Ganztränkung unterzogen werden sollen, die erwähnten umfangreichen Aufwendungen zur Fixierung der Lage der Wicklungsstäbe in den Nuten nicht erforderlich sind. Sofern das zur Tränkung verwendete Harz nur dünnflüssig genug ist, vermag es bei der Tränkung jeden in den Nuten verbliebenen Spalt auszufüllen und somit, nach erfolgter Aushärtung, den gesamten Stator zu einem einzigen kompakten Festkörper werden zu lassen. Vor der Tränkung müssen die Wicklungsstäbe nur soweit in den Nuten fixiert werden, daß sie unter den im weiteren Verlauf des Herstellungsverfahrens auftretenden Beanspruchungen, unter Einschluß einer gewissen Sicherheitsreserve, lagestabil sind. Diese Beanspruchungen betragen in der Tat nur einen Bruchteil der Betriebsbeanspruchungen; somit sind relativ einfache Befestigungen der Wicklungsstäbe in den Nuten für den Zweck vollkommen ausreichend.

Eine wirkungsvolle federnde Befestigung der Wicklungsstäbe in den Nuten wird gesichert, indem jede Nutverschlußleiste mit einer entlang der Nut verlaufenden und in die Nut hineingerichteten Wölbung eingepaßt wird. Damit erhält die Nutverschlußleiste die elastischen Eigenschaften einer Blattfeder, und es erübrigt sich unter Umständen das Einfügen eines weiteren federnden Elementes zwischen Wicklungsstäbe und Nutverschlußleisten. Eine weitere Vereinfachung des Aufbaus und die Möglichkeit der Kompaktifizierung der Anordnung sind die Folge.

Als Nutverschlußleisten werden etwa ebene, elastische Streifen verwendet, die erst beim Einbau ihre Durchwölbung in die Nut hinein erhalten. Die bei allen bisher bekannten Anordnungen notwendige Vorformung der Nutverschlußleisten kann entfallen; die Vorbereitung der Nutverschlußleisten kann z. B. auf das Ausschneiden passender Stücke aus einfach und preiswert verfügbaren größeren Tafeln und leichtes Eindrücken dieser Stücke in die Nuten, bis sie in den entsprechenden Ausnehmungen in den Nutwänden einrasten, beschränkt werden. Eine beträchtliche Verringerung der Kosten für Herstellung und Montage ist die Folge.

Günstig ist es, als Grundwerkstoff für die Nutverschlußleisten faserverstärkten Kunststoff einzusetzen. Wie bereits erwähnt, sind die Anforderungen, die an die Nutverschlußleisten zu stellen sind, nicht sehr hoch, da diese Leisten nur zeitweise und nur unter vergleichsweise geringen Beanspruchungen den Verschluß der Nuten und den Sitz der Wicklungsstäbe gewährleisten müssen. Darüber hinaus ist es unter dem Gesichtspunkt der Vermeidung von Wirbelströmen beim Betrieb nicht wünschenswert, gute elektrische Leiter, wie es Metalle sind, zu verwenden. Faserverstärktem Kunststoff kommt damit als kostengünstigem und gut handhabbarem Material eine besondere Vorzugsstellung zu.

Günstig ist es, als Nutverschlußleisten Glasfasererzeugnisse zu verwenden. Glasfaserverstärkter Kunststoff hat gute elastische Eigenschaften und weist bereits in dünnen Schichten von höchstens einigen Millimetern Dicke eine hohe Festigkeit auf. Nutverschlußleisten aus glasfaserverstärktem Kunststoff stellen ein Verschlußmittel dar, das einen nur sehr geringen Platzbedarf hat. Der Anteil an Verschluß- und Fixierungsmitteln in den Nuten kann dadurch auf ein Minimum reduziert werden, wodurch, bei vorgegebenen Leistungsanforderungen an die elektrischen Großmaschinen, eine besonders kompakte Bauform erreicht werden kann.

Besonders vorteilhaft ist es, die Nutverschlußleisten aus Glashartgewebe mit einer Dicke von etwa 0,3 mm bis zu etwa 5 mm herzustellen. Ein geringer Platzbedarf bei guter Elastizität und Festigkeit wird damit gewährleistet.

Vorteilhaft ist es, als Grundmaterial für die Nutverschlußleisten einen elektrisch halbleitfähigen Werkstoff vorzusehen. Halbleitfähige Nutverschlußleisten können zum Potentialausgleich zwischen den Wänden der Nut und den Wicklungsstäben herangezogen werden. Auf diese Weise werden Glimmentladungen von Nutwand zu Nutwand oder von Nutwand zu Wicklungsstab wirkungsvoll unterbunden; die elektrische Qualität der montierten Statoranordnung wird wirkungsvoll gesichert. Als Werkstoffe kommen vor allem faserverstärkte Kunststoffe, die halbleitfähige Fasern enthalten, z. B. metallisierte Glasfasern oder Kohlefasern, in Betracht. Auch sind Kunststoffe, die selbst halbleitfähig oder mit leitfähigen Pigmenten versehen sind, denkbar.

Vorteilhaft ist es, in jeder Nuten zwischen Nutverschlußleiste und Wicklungsstäbe mindestens eine Zwischenlage aus Fasermaterial, beispielsweise Glasfasermatte, einzubringen. Bei der später folgenden Tränkung wird diese Zwischenlage mit Kunstharz gesättigt, und bei der Aushärtung entsteht eine kompakte Schicht aus faserverstärktem, gehärtetem Harz über den Wicklungsstäben. Diese kompakte Schicht, die, wie bereits erklärt, auch mit den Wänden der Nut fest verbunden ist, wirkt beim Betrieb der fertigen Großmaschine als zusätzliches Haltemittel für die den nunmehr betriebsmäßigen Kräften ausgesetzten Wicklungsstäbe, neben der bereits beschriebenen Verklebung der Wicklungsstäbe mit den Wänden und dem Grund der Nut sowie evtl. untereinander. Es ergibt sich eine besonders hoch belastbare Anordnung.

Günstig ist es, wie im Falle der Nutverschlußfedern für die Zwischenlage halbleitfähige Fasern einzusetzen. In Frage kommen dabei Kohlefasern, metallisierte Glasfasern und/oder Fasern aus leitfähigen Kunststoffen. Es ist nicht unbedingt erforderlich, daß die Zwischenlage nur aus halbleitfähigen Fasern besteht. Es ist sehr wohl denkbar, ein Gemisch aus nicht leitenden Glasfasern und leitenden Kohlefasern oder dergleichen zu verwenden. Der Schutz vor Glimmentladungen, die den Betrieb einer elektrischen Großmaschine empfindlich stören können, wird somit weiter erhöht.

Vorteilhaft ist es, die Fasern der Zwischenlagen vor der Einbringung in die Nuten mit Substanzen zu beschichten oder zu benetzen, die beim Aushärteprozeß die Härtung des Tränkharzes beschleunigen. Die für die Aushärtung des Tränkharzes notwendige Zeit kann damit signifikant verkürzt werden, was eine weitere Reduzierung der Herstellungskosten mit sich bringt.

Sinnvoll ist es, die als Zwischenlage einzubringende Menge an Fasermaterial so reichlich zu bemessen, daß in jeder Nut der Raum zwischen Nutverschlußleiste und Wicklungsstäben weitgehend ausgefüllt ist, wobei die montierte Nutverschlußleiste die Zwischenlage etwas zusammendrückt. Auf diese Weise können eventuelle elastische Eigenschaften der Zwischenlage für die Fixierung der Wicklungsstäbe genutzt werden, und in Verbindung mit dem Tränkharz ergibt sich im fertigen Stator eine kompakte Masse aus gehärtetem Harz und Fasern im Bereich der Nutöffnung als stabiler und robuster Nutverschluß.

In vorteilhafter Ausgestaltung der vorliegenden Erfindung wird als Zwischenlage ein Fasermaterial mit ausgeprägter Federwirkung, beispielsweise eine Glasfasermatte aus mindestens teilweise untereinander verklebten Fasern, eingesetzt. Eine solche Zwischenlage paßt sich in den zur Verfügung stehenden Raum zwischen Nutverschlußleisten und Wicklungsstäben in bestmöglicher Weise ein und gewährleistet somit, daß nach der Tränkung die Nutöffnung mit einem kompakten, fest sitzenden Pfropfen aus faserverstärktem, gehärtetem Harz verschlossen ist.

Auch ist es möglich, die Federwirkung einer federnden Zwischenlage zur Fixierung der Wicklungsstäbe in den Nuten vor der Tränkung zu nutzen. Da die Zwischenlage sich der Form jedes Wicklungsstabes durch ihre Formbarkeit wesentlich besser anpassen kann als die aus relativ hartem Material bestehende Nutverschlußleiste, ist auf diese Weise eine weitere Verbesserung der Fixierung der Lage der Wicklungsstäbe möglich.

Die vorliegende Erfindung lehrt somit den Aufbau von Statoren für elektrische Großmaschinen, die in Nuten eingelegte Wicklungsstäbe enthalten und als Ganzes mit ausgehärtetem Harz imprägniert sind, bei denen die Wicklungsstäbe in den Nuten im wesentlichen nur durch die Verbindungen mit den Wänden und dem Grund der Nut erfolgt, die durch das ausgehärtete Tränkharz vermittelt werden. Solche Statoren können bei vorgegebenen Anforderungen besonders kompakt ausgeführt werden und sind besonders kostengünstig herzustellen.

In einer besonders vorteilhaften Ausgestaltung ist jede Nut eines erfindungsgemäßen Stators in dem von der Nutverschlußleiste begrenzten Bereich im wesentlichen vollständig mit Feststoffen ausgefüllt und bildet einen einzigen Festkörper. In Anbetracht der erheblichen Beanspruchungen, denen ein Stator im Betrieb ausgesetzt ist, stellt ein erfindungsgemäßer Stator sowohl hinsichtlich der Robustheit als auch hinsichtlich der Wirtschaftlichkeit ein Optimum dar.

Die weitere Erläuterung der vorliegenden Erfindung erfolgt anhand der in der Zeichnung dargestellten Ausführungsbeispiele; im einzelnen zeigen:
Fig. 1 einen Querschnitt durch eine Nut mit Wicklungsstäben und Nutverschlußleiste gemäß der vorliegenden Erfindung;
Fig. 2 ein Formteil für eine etwa ebene, erfindungsgemäße Nutverschlußleiste;
Fig. 3 dasselbe Formteil, nach Einbau in die Nut;

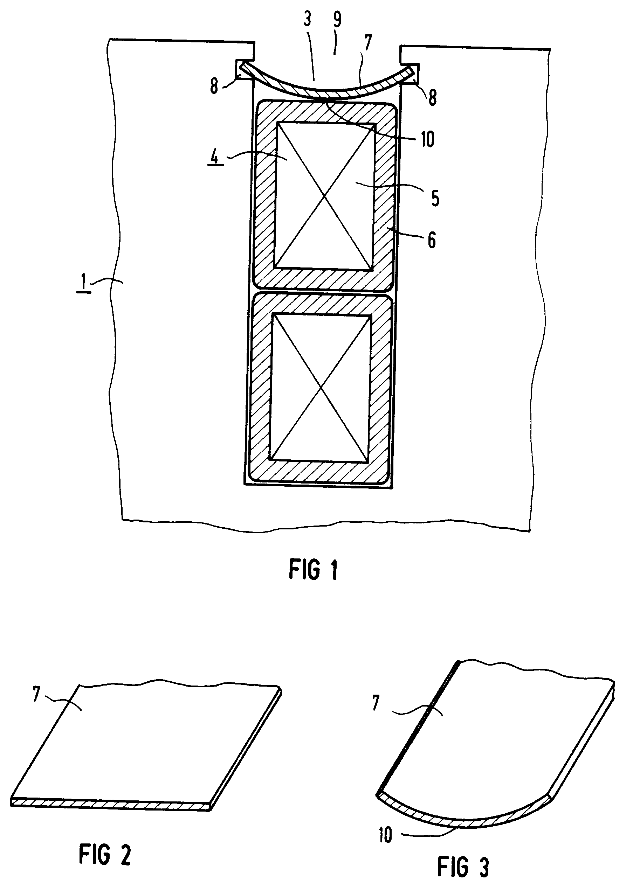

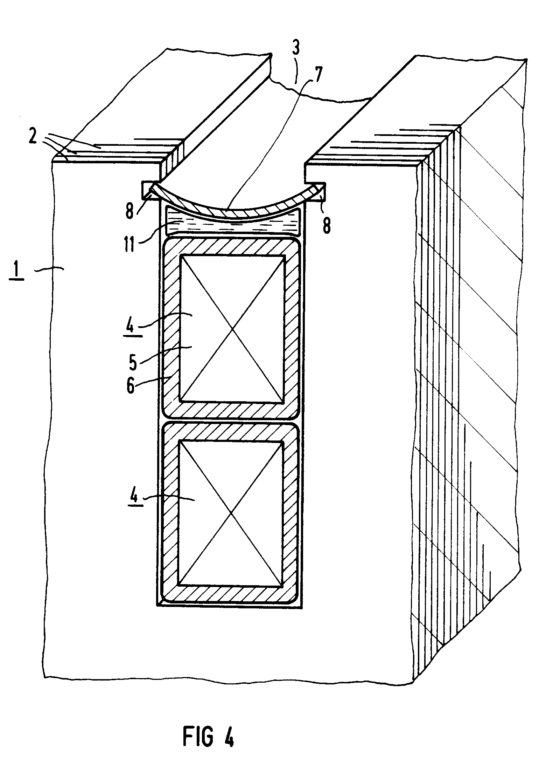

Fig. 4 einen Querschnitt durch eine Nut mit Wicklungsstäben, Zwischenlage und Nutverschlußleiste in perspektivischer Sicht. Wie in Fig. 1 schematisch dargestellt, werden die Leiterwicklungen von Statoren für elektrische Großmaschinen erstellt, indem in Nuten 3 der Formkörper 1 Wicklungsstäbe 4 eingelegt werden. Diese Wicklungsstäbe 4 bestehen in der Regel aus einer Kupferstabanordnung 5, umgeben von Isoliermaterial 6, das in einem isolierstoffhaltigen Band aus Glasseide oder dergleichen besteht. Nach Einlegen der Wicklungsstäbe 4 in die Nut 3 wird diese mittels einer Nutverschlußleiste 7, die in Ausnehmungen 8 in der Wand der Nut 3 im Bereich der Nutöffnung 9 eingepaßt wird, verschlossen. Nachdem sämtliche Nuten 3 des Formkörpers 1 mit Wicklungsstäben 4 und Nutverschlußleisten 7 gefüllt und die Leiterwicklungen durch entsprechende Kontaktierungen der Wicklungsstäbe 4 untereinander erstellt sind, wird die gesamte montierte Anordnung mit einem Kunstharz getränkt, das anschließend ausgehärtet wird. Vor und während der Tränkung mit Harz preßt die Nutverschlußleiste 7 die Wicklungsstäbe in die Nut 3 hinein und sichert so ihre Position. Die Anpreßkraft entsteht dadurch, daß die Nutverschlußleiste 7 als Blattfeder ausgebildet ist mit einer Wölbung 10, die entlang der Nut 3 verläuft und in die Nut 3 hineingerichtet ist.

Wie bereits erwähnt, ist es z. B. möglich, bei einem erfindungsgemäßen Stator Nutverschlußleisten 7 einzusetzen, die lediglich aus etwa ebenem Material geschnitten sind. Ein Formteil für eine solche Nutverschlußleiste 7 zeigt Fig. 2. Fig. 3 zeigt, wie dieses Formteil nach dem Einbau in die Statoranordnung durchwölbt wird. Die Wölbung 10 drückt dabei gegen die Wicklungsstäbe 4 und sichert somit ihre Lage.

Fig. 4 zeigt eine vorteilhafte Ausgestaltung der erfindungsgemäßen Statoranordnung. Der Formkörper 1 des Stators besteht aus einer Vielzahl einzelner Bleche 2, die mit nicht dargestellten Mitteln zusammengehalten werden. Die Nut 3 wird aus Aussparungen in diesen Blechen 2 gebildet. In der Nut 3 ist zwischen Nutverschlußleiste 7 und Wicklungsstäben 4 eine Zwischenlage 11 aus Fasermaterial angeordnet. Diese Zwischenlage 11 wird nach Tränkung und Aushärtung des Tränkharzes zu einer kompakten Lage aus faserverstärktem, hartem Kunstharz und sichert so zusätzlich die Lage der Wicklungsstäbe 4, die im übrigen dadurch fest in der Nut gehalten werden, daß innige Verbindungen zwischen den Wänden der Nut 3 und dem harzgetränkten Isoliermaterial 6, das die Kupferstabanordnung 5 jedes Wicklungsstabes 4 umgibt, entstanden sind. Diese Verbindungen werden dadurch verstärkt, daß das Harz auch in eventuelle kleine Spalte zwischen jeweils zwei Blechen 2 eindringt und diese ausfüllt. Nach der Tränkung mit Harz und der Aushärtung des Harzes ist die Nut 3 in einer Anordnung, wie dargestellt in Fig. 4, bis unter die Nutverschlußleiste 7 praktisch vollständig mit Feststoffen ausgefüllt. Durch den Anteil an ausgehärtetem Tränkharz sind alle in der Nut 3 enthaltenen Bestandteile, Wicklungsstäbe 4, Zwischenlage 11 und Nutverschlußleiste 7, fest mit dem Formkörper 1 verbunden. Kommt als Zwischenlage 11 ein federndes Material, z. B. eine poröse Glasmatte aus untereinander verklebten Fasern, zum Einsatz, so kann diese selbst unter Umständen als Federelement zur Einpressung der Wicklungsstäbe 4 in die Nut 3 dienen. Eine federnde Wirkung der Nutverschlußleiste 7 kann dabei überflüssig sein; es kann eine im wesentlichen flache Nutverschlußleiste 7, wie sie in Fig. 2 dargestellt ist, verwendet werden.

Die vorliegende Erfindung lehrt die besonders einfache und wirtschaftliche Herstellung von Statoren für elektrische Großmaschinen unter Einbeziehung des Ganztränkverfahrens, wobei sich die Statoren durch gute elektrische Eigenschaften und hohe Robustheit auszeichnen.

## Patentansprüche

1. Verfahren zur Herstellung des Stators einer elektrischen Großmaschine, dessen Leiterwicklungen zum Teil aus in Nuten (3) eingelegten Wicklungsstäben (4) bestehen, mit den Merkmalen:
a) die Wicklungsstäbe (4) werden in die Nuten (3) eingelegt;
b) die Nuten (3) werden mittels Nutverschlußleisten (7) aus dünnen, vor der Einpassung etwa ebenen Platten unter Bewirkung einer federnden Einpressung der Wicklungsstäbe (4) in die Nuten (3) verschlossen, wobei jede Nutverschlußleiste (7) unter Bildung einer entlang der Nut (3) verlaufenden, in die Nut (3) hineingerichteten Wölbung (10) in Ausnehmungen (8) der Nut (3) im Bereich der Nutöffnung (9) eingepaßt wird;
c) die Einpressung der Wicklungsstäbe (4) erfolgt lediglich mit einer solchen Kraft, wie sie zur Verhinderung wesentlicher Lageänderungen der Wicklungsstäbe (4) während des weiteren Herstellungsverfahrens ausreichend ist; dadurch gekennzeichnet, daß
d) die montierte Statoranordnung mit aushärtbarem Kunstharz im Wege der Ganztränkung imprägniert wird;
e) die Kunstharz-Imprägnierung durch Wärmebehandlung ausgehärtet wird.

2. Verfahren nach Anspruch 1, **dadurch gekennzeichnet**, daß die Nutverschlußleisten (7) aus faserverstärktem Kunststoff bestehen.

3. Verfahren nach Anspruch 2, **dadurch gekennzeichnet**, daß die Nutverschlußleisten (7) Glasfasern enthalten.

4. Verfahren nach Anspruch 3, **dadurch gekennzeichnet**, daß die Nutverschlußleisten (7) aus Glashartgewebe mit einer Dicke von etwa 0,3 mm bis zu etwa 5 mm bestehen.

5. Verfahren nach einem der vorhergehenden Ansprüche, **dadurch gekennzeichnet**, daß die Nutverschlußleisten (7) aus elektrisch halbleitfähigem Material bestehen.

6. Verfahren nach einem der vorhergehenden Ansprüche, **dadurch gekennzeichnet**, daß in jeder Nut (3) zwischen Nutverschlußleiste (7) und Wicklungsstab (4) bzw. Wicklungsstäbe (4) mindestens eine Zwischenlage (11) aus Fasermaterial, insbesondere Glasfasermatte oder dergleichen, eingebracht wird.

7. Verfahren nach Anspruch 6, **dadurch gekennzeichnet**, daß die Zwischenlage (11) aus halbleitfähigem Material besteht.

8. Verfahren nach Anspruch 6 oder 7, **dadurch gekennzeichnet**, daß die Fasern der Zwischenlage (11) mit einer Substanz beschichtet oder benetzt sind, die die Aushärtung des Tränkharzes beschleunigt.

9. Verfahren nach einem der Ansprüche 6 bis 8, **dadurch gekennzeichnet**, daß die Zwischenlage (11) von der Nutverschlußleiste (7) zusammengedrückt wird.

10. Verfahren nach einem der Ansprüche 6 bis 9, **dadurch gekennzeichnet**, daß als Zwischenlage (11) ein federndes Material, insbesondere eine Glasfasermatte mit mindestens teilweise untereinander verklebten Fasern, verwendet wird.

11. Verfahren nach Anspruch 10, **dadurch gekennzeichnet**, daß vor der Tränkung das Einpressen der Wicklungsstäbe (4) in die Nuten (3) mindestens teilweise durch die Federwirkung der Zwischenlage (11) erfolgt.

12. Verfahren nach einem der vorhergehenden Ansprüche, **dadurch gekennzeichnet**, daß vor der Tränkung das Einpressen der Wicklungsstäbe (4) in die Nuten (3) im wesentlichen durch eine Federwirkung der Nutverschlußleiste (7) erfolgt.

13. Stator einer elektrischen Großmaschine, mit Wicklungsstäben (4), die in Nuten (3) eingelegt sind, als Ganzes imprägniert mit ausgehärtetem Tränkharz, hergestellt nach dem Verfahren gemäß einem der vorhergehenden Ansprüche, **dadurch gekennzeichnet**, daß die Fixierung der Wicklungsstäbe (4) in den Nuten (3) im wesentlichen durch das ausgehärtete Tränkharz gegeben ist.

14. Stator nach Anspruch 13, wobei zwischen Wicklungsstäben (4) und Nutverschlußleisten (7) Zwischenlagen (11) aus Fasermaterial angeordnet sind, insbesondere hergestellt mit dem Verfahren gemäß einem der Ansprüche 6 bis 12, **dadurch gekennzeichnet**, daß jede Nut (3) in dem von der Nutverschlußleiste (7) begrenzten Bereich im wesentlichen vollständig mit Feststoffen ausgefüllt ist.

## Claims

1. Method for producing the stator of a heavy electric machine, the conductor windings of which partially consist of winding rods (4) inserted into slots (3), having the features:
a) the winding rods (4) are inserted into the slots (3);
b) the slots (3) are closed by means of slot closing strips (7) of thin plates, which are approximately flat before the fitting-in, effecting an elastic pressing of the winding rods (4) into the slots (3), each slot closing strip (7) being fitted into recesses (8) of the slot (3) in the area of the slot opening (9), forming an arching (10) directed into the slot (3) and extending along the slot (3);
c) the winding rods (4) are only pressed in with a force which is sufficient for preventing significant positional changes of the winding rods (4) during the further production process; characterized in that
d) the assembled stator arrangement is impregnated with curable synthetic resin by way of postimpregnation;
e) the synthetic resin impregnation is cured by heat treatment.

2. Method according to Claim 1, characterized in that the slot closing strips (7) consist of fibre-reinforced plastic.

3. Method according to Claim 2, characterized in that the slot closing strips (7) contain glass fibres.

4. Method according to Claim 3, characterized in that the slot closing strips (7) consist of hard glass fabric having a thickness of about 0.3 mm to about 5 mm.

5. Method according to one of the preceding claims, characterized in that the slot closing strips (7) consist of electrically semiconductive material.

6. Method according to one of the preceding claims, characterized in that at least one intermediate layer (11) of fibre material, particularly glass fibre mat or the like, is inserted between slot closing strip (7) and winding rod (4) or winding rods (4) in each slot (3).

7. Method according to Claim 6, characterized in that the intermediate layer (11) consists of semiconductive material.

8. Method according to Claim 6 or 7, characterized in that the fibres of the intermediate layer (11) are coated or wetted with a substance which accelerates the curing of the impregnating resin.

9. Method according to one of Claims 6 to 8, characterized in that the intermediate layer (11) is compressed by the slot closing strip (7).

10. Method according to one of Claims 6 to 9, characterized in that an elastic material, particularly a glass fibre mat with fibres which are at least partially bonded to one another is used as intermediate layer (11).

11. Method according to Claim 10, characterized in that before the impregnation, the pressing-in of the winding rods (4) into the slots (3) is at least partially effected by the spring action of the intermediate layer (11).

12. Method according to one of the preceding claims, characterized in that before the impregnation, the pressing-in of the winding rods (4) into the slots (3) is essentially effected by a spring action of the slot closing strip (7).

13. Stator of a heavy electric machine, with winding rods (4) which are inserted into slots (3), impregnated with cured impregnating resin as a whole, produced in accordance with the method according to one of the preceding claims, characterized in that the fixing of the winding rods (4) in the slots (3) is essentially given by the cured impregnating resin.

14. Stator according to Claim 13, intermediate layers (11) of fibre material being arranged between winding rods (4) and slot closing strips (7), particularly produced by means of the method according to one of Claims 6 to 12, characterized in that each slot (3) is essentially completely filled with solids in the area limited by the slot closing strip (7).

## Revendications

1. Procédé de fabrication du stator d'une machine électrique de grande dimension, dont les enroulements conducteurs sont constitués en partie de barreaux d'enroulement (4) insérées dans des encoches (3), présentant les caractéristiques suivantes :
a) on insère les barreaux d'enroulement (4) dans les encoches (3);
b) on ferme les encoches (3) à l'aide de réglettes de fermeture (7) formées de plaques minces, à peu près planes avant leur ajustement, en poussant élastiquement les barreaux d'enroulement (4) dans les encoches (3), chaque réglette (7) de fermeture d'une encoche étant adaptée dans des évidements (8) de l'encoche (3) ménagés dans la région de l'ouverture (9) de cette dernière, en formant une partie cintrée (10), qui s'étend le long de l'encoche (3) et qui est dirigée vers l'intérieur de cette dernière;
c) la poussée des barreaux d'enroulement (4) s'effectue en appliquant seulement une force telle qu'elle suffit à empêcher des variations importantes de position des barreaux d'enroulement (4) pendant le reste du procédé de fabrication;
caractérisé en ce que
d) on imprègne le dispositif de stator monté d'une résine de matière plastique thermodurcissable en effectuant une imprégnation complète;
e) on durcit l'imprégnation de résine de matière plastique par un traitement thermique.

2. Procédé suivant la revendication 1, caractérisé en ce que les réglettes (7) de fermeture des encoches sont en une matière plastique renforcée par des fibres.

3. Procédé suivant la revendication 2, caractérisé en ce que les réglettes (7) de fermeture des encoches contiennent des fibres de verre.

4. Procédé suivant la revendication 3, caractérisé en ce que les réglettes (7) de fermeture des encoches sont en un tissu de verre dur d'une épaisseur comprise entre 0,3 mm et 5 mm environ.

5. Procédé suivant l'une des revendications précédentes, caractérisé en ce que les réglettes (7) de fermeture des encoches sont en un matériau électriquement semiconducteur.

6. Procédé suivant l'une des revendications précédentes, caractérisé en ce que dans chaque encoche (3) on insère, entre une réglette (7) de fermeture de l'encoche et le ou les barreaux d'enroulement (4), au moins une couche intermédiaire (11) en un matériau fibreux, notamment un mat de fibres de verre ou analogue.

7. Procédé suivant la revendication 6, caractérisé en ce que la couche intermédiaire (11) est en un matériau semiconducteur.

8. Procédé suivant la revendication 6 ou 7, caractérisé en ce que les fibres de la couche intermédiaire (11) sont enrobées ou mouillées par une substance qui accélère le durcissement de la résine d'imprégnation.

9. Procédé suivant l'une des revendications 6 à 8, caractérisé en ce que la couche intermédiaire (11) est comprimée par la réglette (7) de fermeture de l'encoche.

10. Procédé suivant l'une des revendications 6 à 9, caractérisé en ce qu'on utilise comme couche intermédiaire (11) un matériau élastique, notamment un mat de fibres de verre et comportant des fibres au moins partiellement collées entre elles.

11. Procédé suivant la revendication 10, caractérisé en ce qu'avant l'imprégnation, la poussée des barreaux d'enroulement (4) dans les encoches (3) s'effectue au moins partiellement grâce à l'action élastique de la couche intermédiaire (11).

12. Procédé suivant l'une des revendications Précédentes, caractérisé en ce qu'avant l'imprégnation, la poussée des barreaux d'enroulement (4) dans l'encoche (3) s'effectue essentiellement grâce à l'action élastique des réglettes (7) de fermeture des encoches.

13. Stator d'une machine électrique de grande dimenstion, comportant des barreaux d'enroulement (4) insérées dans des encoches (3) et imprégnées dans leur ensemble d'une résine d'imprégnation thermodurcissable, fabriqué conformément au procédé selon l'une des revendications précédentes, caractérisé en ce que la fixation des barreaux d'enroulement (4) dans les encoches (3) est obtenue essentiellement par la résine d'imprégnation durcie.

14. Stator suivant la revendication 13, dans lequel les couches intermédiaires (11) en un matériau fibreux sont interposées entre les barreaux d'enroulement (4) et les réglettes (5) de fermeture des encoches, fabriqué notamment conformément au procédé selon l'une des revendications 6 à 12, caractérisé en ce que chaque encoche (3) est emplie, dans la partie délimitée par la réglette (7) de fermeture de l'encoche, sensiblement complètement de substances solides.
